# EUROPEAN PATENT APPLICATION

(11) **EP 4 641 368 A1**
(43) Date of publication of application: **29.10.2025**
(21) Application number: 25171626.2
(22) Date of filing: 22.04.2025
(51) Int. Cl.: G06F 8/30, G05B 19/05, G06F 16/3329, G06N 5/022, G06N 20/00

(54) **AUTOMATED CONTROL APPLICATION DEVELOPMENT WITH IEC 61499 ARCHITECTURE**

(30) Priority: 22.04.2024 IN 202411031775; 28.03.2025 IN 202511029969
(71) Applicant: SCHNEIDER ELECTRIC INDUSTRIES SAS, 92500 Rueil-Malmaison (FR); Schneider Electric USA, Inc., Boston, MA 02108 (US)
(72) Inventor: KHANDELWAL, Vivek, 560067 Bengaluru (IN); GADRE, Nikhil, 560067 Bengaluru (IN); JAKATI, Sanafalak Ismail, 560067 Bengaluru (IN); KURADA, Vidya, 560067 Bengaluru (IN); ANTONY, Ananth, 41460 Neuss (DE)
(74) Representative: Friese Goeden Patentanwälte PartGmbB

(57) **Abstract**

Relatively simple user input is used to develop an automated control application. For automated control application development with IEC 61499 architecture, a method includes receiving a system prompt, automatically retrieving relevant information from a large corpus, wherein the large corpus includes a plurality of libraries, automatically creating an asset based on the relevant information, automatically generating a control sequence based on the relevant information, automatically generating a human-machine interface based on the relevant information, automatically generating a test case based on the relevant information, and automatically generating documentation based on the relevant information.

## Description

### CROSS-REFERENCE TO RELATED APPLICATIONS

This application claims the benefit of Indian Patent Application No. 202411031775, filed April 22, 2024, and Indian Patent Application No. 202511029969, filed March 28, 2025.

### BACKGROUND

Control applications are developed to automate discrete machines, continuous or batch processes. Using known methods and systems to gain a thorough understanding of an automation and/or control system can be tedious and time-consuming. For example, engineers may need to watch machine videos, read operator manuals, and/or have multiple discussions with users to gather high-level machine requirements. Moreover, known tools for developing automation and control systems involve time-consuming steps to define data models, define data relationships, create assets, write control sequences, and test and validate the code. Relying on human efforts alone may also lead to inaccuracies, inconsistencies, or other problems. Furthermore, at least some control applications are not adapted to advanced architectures, such as required by the International Electrotechnical Commission (IEC) standard IEC 61499, which defines an event-driven paradigm. Faster control application development is hindered by stringent deadlines, the rigor involved in going through hundreds of pages to understand requirements, a steep learning curve involved in understanding IEC 61499 practices, and a lack of experts and expertise.

### SUMMARY

Aspects of the present disclosure enable development of an automated control application based on relatively simple user input.

In one aspect, a method is provided for automated control application development in accordance with IEC 61499 architecture. The method includes receiving a system prompt and automatically retrieving relevant information from a large corpus, which includes a plurality of libraries. The method also includes automatically creating an asset based on the relevant information, automatically generating a control sequence based on the relevant information, automatically generating a human-machine interface based on the relevant information, automatically generating a test case based on the relevant information, and automatically generating documentation based on the relevant information.

In another aspect, a computing system is provided. The computing system includes one or more computer storage media including data and computer-executable instructions, and one or more processors configured to execute the computer-executable instructions. When executed, the instructions configure the processor to receive a system prompt and automatically retrieve relevant information from a large corpus, which includes a plurality of libraries. The instructions further configure the processor to automatically create an asset based on the relevant information, automatically generate a control sequence based on the relevant information, automatically generate a human-machine interface based on the relevant information, automatically generate a test case based on the relevant information, and automatically generate documentation based on the relevant information.

Other objects and features of the present disclosure will be in part apparent and in part pointed out herein.

### BRIEF DESCRIPTION OF THE DRAWINGS

FIG. 1 is a block diagram illustrating an example system for automatically generating application code according to an embodiment;
FIG. 2A is a flow diagram illustrating an example process for generating application code in accordance with IEC 61499 architecture by the system of FIG. 1 according to an embodiment;
FIG. 2B shows an example large language model (LLM) architecture with low-rank adaptation (LoRA) for use with the system of FIG. 1 and the process of FIG. 2A according to an embodiment;
FIG. 3 shows example supporting libraries for the IEC 61499 framework according to an embodiment;
FIG. 4 is a block diagram illustrating example operations for generating application code by the system of FIG. 1 according to an embodiment;
FIG. 5 is a flow chart illustrating an example process for use with the operations shown in FIG. 4 according to an embodiment;
FIG. 6 shows example criteria that may be used for evaluating code generated using the system shown in FIG. 1 according to an embodiment;
FIG. 7A is a block diagram illustrating an example system and process for generating a control sequence using the system shown in FIG. 1 according to an embodiment;
FIG. 7B is a block diagram illustrating an example system and process for generating a human-machine interface (HMI) using the system shown in FIG. 1 according to an embodiment;
FIG. 7C is a block diagram illustrating an example system and process for generating a test case using the system shown in FIG. 1 according to an embodiment;
FIG. 7D is a block diagram illustrating an example system and process for generating documentation using the system shown in FIG. 1 according to an embodiment;
FIG. 7E is a block diagram illustrating an example system and process for automated data modeling and updating using the system shown in FIG. 1 according to an embodiment;
FIG. 8 is a block diagram illustrating example inputs and outputs associated with the system shown in FIG. 1 according to an embodiment;
FIGS. 9A to 9D are example function block diagrams and corresponding XML output generated by the system of FIG. 1 according to an embodiment; and
FIG. 10 is a computer architecture diagram illustrating an example computing system that may be used to perform one or more computing operations in the illustrated examples according to an embodiment.

Corresponding reference characters indicate corresponding parts throughout the drawings.

### DETAILED DESCRIPTION

The features and other details of the concepts, systems, and techniques sought to be protected herein will now be more particularly described. It will be understood that any specific embodiments described herein are shown by way of illustration and not as limitations of the disclosure and the concepts described herein. Features of the subject matter described herein can be employed in various embodiments without departing from the scope of the concepts sought to be protected.

The present disclosure relates to automated systems and, more particularly, to automated control application development in accordance with IEC 61499 architecture. Examples described herein enable automated, end-to-end application development, leveraging existing distributed industrial automation system architecture, and considering batch process control standards with minimal user interference or involvement. The methods and systems described herein can cater to various programming languages and/or engineering tools. The present disclosure relates to a software-defined approach to automation, developing a single, scalable industrial automation environment for continuous, hybrid, or discrete processes. Examples described herein simplify the existing complexity and allow users to update or change their automation based on what they need, when they need it, and from whom they want it.

Unless defined otherwise, all technical and scientific terms used herein have the same meaning as commonly understood by one of ordinary skill in the art to which the disclosure belongs. Although any methods and materials similar to or equivalent to those described herein may be used in the practice or testing of the present disclosure, example systems and methods are described below.

To meet the needs of an industrial system, tools are needed for efficient management, configuration, and control of devices within the system. Optimally, an interactive engineering management software provides simplified management and programming tools for users. Users refers to any entity configuring and/or managing application development. For example, users may include operators of a plant, personnel with programming expertise in the industrial environment, or other automated devices that may provide instructions for configuring or creating the applications. However, each device within the system requires application code for execution within the environment. Because devices may originate from various manufacturers, different requirements may apply. To simplify and unify management, standards create uniform guidelines for creating application code or other reusable software components. For example, IEC 61499 provides a standard for management within industrial applications.

The need for distributed control topologies has resulted in the development of a programming language standard such as IEC 61499, which is an international standard published by International Electrotechnical Commission dedicated to distributed (event-based) industrial applications. Generally, IEC 61499 defines a generic architecture that enables an application-centric design in which one or more applications, defined by networks of interconnected function blocks, are created for the whole system and subsequently distributed to available devices. A function block is a convenient programming mechanism that consolidates a group of programming instructions to perform a specific and normalized action, such as speed control, interval control, or counting. IEC 61499 addresses the topic of a function blocks-based, distributable control application for industrial process measurement and control systems.

In the IEC 61499 architectural model, distributable applications are built by interconnecting instances of reusable function block types with appropriate event and data connections in the same manner as designing a circuit board with integrated circuits. Using IEC 61499-compliant software tools, these function blocks can be distributed and then deployed across a network to a runtime component of physical devices (controllers) compliant with IEC 61499. In this manner, distributed control and automation systems are configurable from libraries of reusable IEC 61499-compliant components.

According to this standard, control application execution is event-driven, where events represent changes in the system's state or conditions, unlike the classical scan-based distributed control systems. The IEC 61499 standard also specifies a set of software components and applications that an implementer of the standard must implement or develop.

While the IEC 61499 standard provides structure for function block development, without additional tools, usage of the standard is reliant on individual user expertise with the standard. By utilizing specially trained machine learning models such as LLMs in combination with interactive engineering management software, a system can provide easy and efficient generation of application code for implementation within an industrial automation system. Further, by leveraging fine-tuned training, such as through LoRA, an LLM may operate on relatively lightweight hardware within the industrial automation system and with a more efficient and targeted training process.

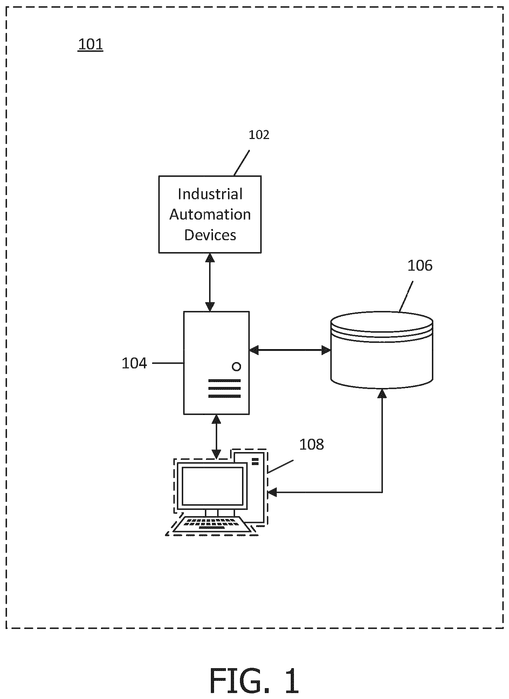

Referring to the figures and description below, a system 101 for generating an application is disclosed. FIG. 1 is a block diagram illustrating the system 101, which may also be referred to as an engineering system. The system 101 generates an application for controlling and operating industrial automation devices 102. Industrial automation devices 102 can include control devices such as distributed control systems (DCS), a supervisory control and data acquisition (SCADA) system, programmable automation controllers (PACs), remote terminal units (RTUs), industrial automation and control systems (IACS), intelligent electronic devices (IEDs). Additionally, the industrial automation devices 102 can include industrial equipment for performing the industrial process such as sensors, robotics, or other machinery. Examples of various industrial automation devices 102 of the industrial automation system are further described in U.S. Patent Application Publication No. 2024/0377808, entitled, "Systems and Methods for Autonomous Anomaly Management of an Industrial Site," assigned to Schneider Electric System USA, Inc., the entire contents of which are hereby incorporated by reference.

In some embodiments, the generated application code conforms with the IEC 61499 standard. However, while described below with respect to the IEC 61499 standard, other software standards may define the reusable software component requirements. An engineering processor 104 generates the application code (or reusable software component). In some embodiments, the engineering processor 104 monitors and controls operation of the industrial system within the industrial facility. In other embodiments, the engineering processor 104 operates outside the industrial facility through the cloud. The engineering processor 104 electronically couples with a memory storing instructions for performing generation of the application code.

In some embodiments, the engineering processor 104 of FIG. 1 executes interactive engineering management software enabling a user to configure and alter the industrial system and its components. The engineering processor 104 couples with input and output devices such as a keyboard, mouse, displays, and/or microphone for inputting information to the processor 104 and interactive software. Further, the interactive engineering management software enables a user to input information for application code generation. The interactive software further displays aspects of the industrial automation system including a network of function blocks comprising application code. For example, Schneider Electric's EcoStruxure Automation Expert (EAE) provides a suitable interactive software for managing aspects of the system for generating application code as well as the industrial automation system itself.

An engineering database 106 electronically couples with the engineering processor 104. The engineering database 106 stores information about the industrial automation system. In some embodiments, the engineering database 106 further stores standard information about application code generation. Standard information includes syntax, semantic, and best practices information. In some embodiments, the syntax, semantic, and best practices information are defined by a standard such as IEC 61499. In one or more embodiments, the engineering database 106 additionally stores historical application code information, such as previously generated application code, information about the devices associated with the application code, and execution information for the application code.

Referring further to FIG. 1, an LLM engine 108 receives an input information from a user to generate application code. The engineering processor 104 executes the LLM engine 108. The LLM engine 108 trains on historical application code information as well as pre-generated application code designed to execute tasks within the industrial automation system. In some embodiments, the LLM engine 108 further trains on semantics, syntax, and best practice information for the generation of application code. In some embodiments, the LLM engine 108 implements LoRA to update the model based on industrial system information. By utilizing LoRA, the model updates targeted parameters and enables simplified retraining and execution.

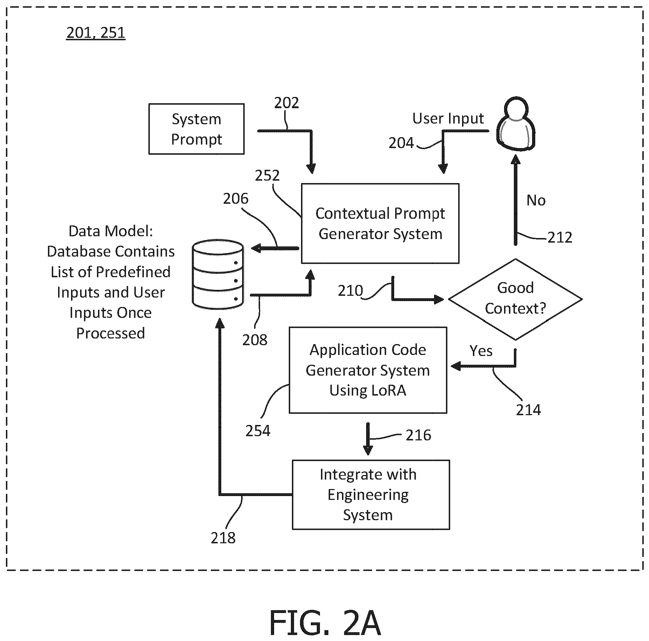

FIG. 2A is a flow diagram 201 illustrating a process of generating application code according to an embodiment. Starting at step 202, the engineering processor 104 receives a natural language input to generate application code. At step 204, a user (e.g., an operator) may provide information for building a particular control application. For example, user input may include system diagrams (e.g., P&ID), flow sheets, process descriptions, etc. for use in building or updating a data model. In some embodiments, the user inputs text into a prompt of the interactive software to create the natural language input. In other embodiments, the user speaks the input into a microphone coupled to the engineering processor 104, to which a speech-to-text engine renders into text. For example, a user may input a request to "create application for cascade PID for controlling tank level, using feed control valve."

In some embodiments, the LLM engine 108 executed by the engineering processor 104 evaluates the input text at steps 206, 208, and 210. The LLM engine 108 evaluates the text to determine whether the text provides enough information for the generation of the application code. For example, to generate proper application code according the IEC 61499 standard, the LLM engine 108 may need to identify a device for execution control, the function objective, one or more function states, and function variables. This input information thus can be correlated to components of the function block, such as input events, input variables, the state buffer, the algorithm logic, output events, and output variables, included in the application code.

Referring to the previous example input of "create application for cascade PID for controlling tank level, using feed control valve," the LLM engine 108 may determine that the input identifies an objective, namely, perform "cascade PID control" and an input "feed control valve." As a result, the LLM engine 108 then determines whether the information may be rendered into application code. In some embodiments, if the LLM engine 108 determines that the input text is insufficient for generation, the LLM engine 108 generates a prompt to present to the user requesting for more information. Then the LLM engine 108 may receive a supplemental or alternative input from the user to meet the requirements for generation. For example, if a user only requests "generate application code to perform cascade PID control," the LLM engine 108 may request the user to indicate which feed control element is to be used. In other embodiments, if the input is insufficient such that it does not provide adequate context for the prompt, the LLM engine 108 generates an error and returns at step 212 to receive a new input from the user at 204 of FIG. 2A. Thus, in response to the example insufficient requests, the LLM engine 108 requests the user to input a complete request for generation. Then at step 214, assuming the input was sufficient at the "good context" decision block of FIG. 2A, the LLM engine 108 proceeds to generate components of the application code. A contextual prompt generator system 252 (discussed further herein) may communicate with an application code generator system 254 (also discussed further herein) to generate a data model and output the model at step 216, which may be integrated with the system 101. At step 218, the contextual prompt generator system 252 may communicate with the engineering database 106 to save the data model at the engineering database 106.

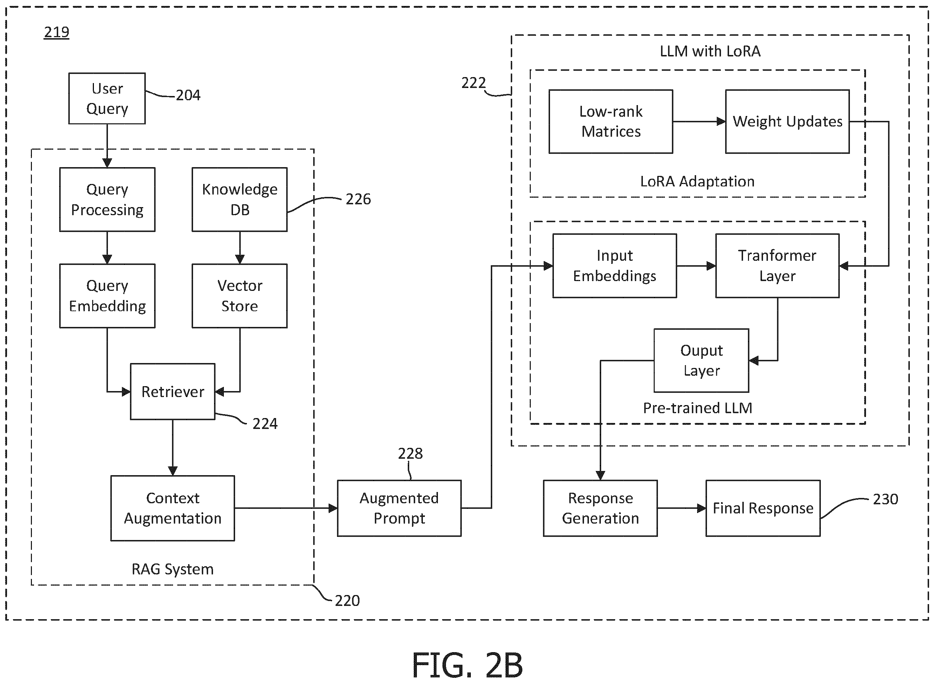

FIG. 2B shows an example machine learning system 219 having an LLM architecture with low-rank adaptation (LoRA) for use with the process of FIG. 2A and/or the system 101 of FIG. 1, according to an embodiment.

In some examples, the machine learning system 219 may include a retriever-augmented-generation (RAG) system 220 that receives user input at 204. The RAG system 220 may include or communicate with at least one LLM 222, which is configured to analyze the user input 204 and determine one or more machine requirements or specifications for effectively performing one or more functions. Such machine requirements may include one or more of hardware specifications, operating systems, software libraries, software frameworks, runtime environments, network connectivity, environmental considerations (e.g., temperature, humidity, vibration tolerance, etc.), regulatory compliance, industry standards, etc. retrieved from a database. In some examples, the RAG system 220 may determine whether there is sufficient context to understand the user input 204 and/or determine one or more machine requirements. If there isn't sufficient context, RAG system 220 may prompt the user for additional user input.

Referring further to FIG. 2B, RAG system 220 is configured to generate accurate, relevant, and contextually-appropriate prompts based on the user input 204 (or Function Design Specifications (FDS) or Hardware Design Specifications (HDS)). The RAG system 220 may include or communicate with a retrieval/generator component 224 configured to retrieve relevant information from a large corpus or database 226 (e.g., based on the user input) and configured to generate a response in the form of a finalized prompt 228 based on the retrieved relevant information (e.g., RAG). The RAG system 220 may also include or communicate with an orchestrator component (not shown) configured to manage or control the flow of information and/or control between the retrieval and/or generator components. In some examples, the RAG system 220 may include or communicate with the LLM 222 configured to analyze the augmented prompts 228 for use in generating code, which is output as a final response 230 in the form of, for example, a series of function blocks comprising a complete application.

In an embodiment, machine learning system 219 is configured to generate accurate, relevant, and contextually-appropriate code based on the prompts 228. The prompts 228 are used to, for example, translate machine requirements from industrial terminologies to simpler but sufficient details for the LLM 222 to understand. A RAG-based LLM has sufficient context (e.g., libraries, a code database, a look-up table, etc.) for converting user prompts to software terminologies.

During operation, the various components of machine learning system 219 may perform their respective operations in a "black box". In this manner, a user may interact with the inputs and outputs of the system 219 without understanding the internal workings of the system 219. From the user's perspective, the user provides user input to the system 219 and then sees response 230 including the code on a display.

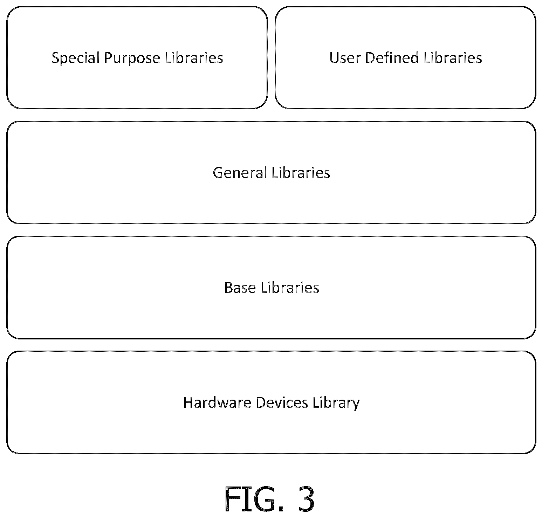

FIG. 3 shows example supporting libraries for the IEC 61499 framework for generating code. In the example of FIG. 3, the system 101 accesses the supporting libraries for functionalities such as sorting algorithms, timer/counter sequences, Array/String operations, LIFO/FIFO, motor, PID, valve information, sequencers, etc. useful for the system 101. These are common elements in accordance with the protocol or standard in use. A code generator-evaluator process accesses the various libraries for generating code.

Automated code generation promotes consistency across different parts of system 101, which may lead to more reliable and maintainable systems and/or reduce the likelihood of errors caused by manual coding inconsistencies, especially in complex systems with numerous interdependent components. For example, automated control application development in accordance with IEC 61499 architecture may ensure uniformity in code structure by enforcing coding conventions, naming conventions, and/or design patterns. The system 101 may also be used to generate documentation alongside the code, providing additional information regarding the system architecture, signal flow, and/or logic structure which may be helpful for troubleshooting, maintenance, and/or knowledge transfer. In some examples, system 101 may enhance interoperability and/or streamline the development process by facilitating integration with other software tools and systems, such as simulation software, HMI/SCADA systems, and/or database interfaces.

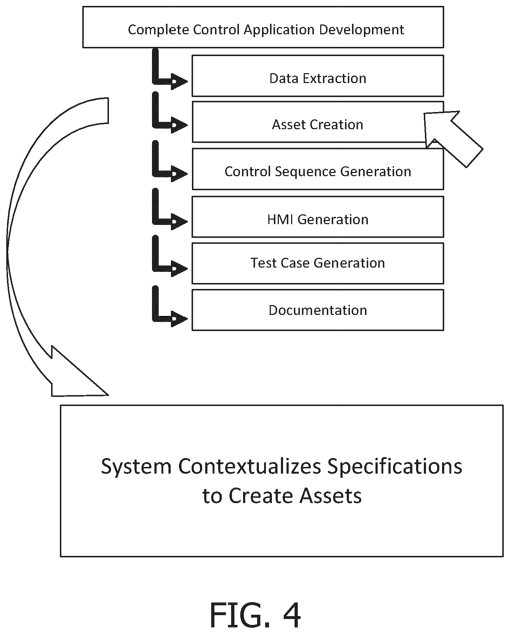

FIG. 4 shows example operations which may be performed by the systems described herein for use in automated process control application development. In some examples, one or more operations may be performed based on user-driven activity selection. For example, upon receiving a selection of "Asset Creation", the system may analyze one or more specifications or in the context of asset creation and contextualize the specifications in one or more system prompts to create one or more assets. Additionally or alternatively, upon receiving a selection of "Control Sequence Generation", the system may analyze one or more specifications in the context of control sequence generation and contextualize the specifications in one or more system prompts to generate one or more control sequences by designing the system prompts to ask questions regarding sequence manager, start, stop, abort or other sequences and interlocks. Additionally or alternatively, upon receiving a selection of "Test Case Generation", the system may analyze one or more specifications in the context of test case generation and contextualize the specifications in one or more system prompts to generate one or more test cases for use in validating the generated control sequences. Additionally or alternatively, upon receiving a selection of "Complete Control Application Development", the system may analyze one or more specifications in the context of application development and contextualize the specifications in one or more system prompts to develop one or more applications by performing each operation in sequence (e.g., data extraction, asset creation, control sequence generation, HMI generation, test case generation, and/or documentation). In this manner, one or more operations may be performed to provide for various aspects of application development, including guided execution, assistive debugging, and/or contextual help.

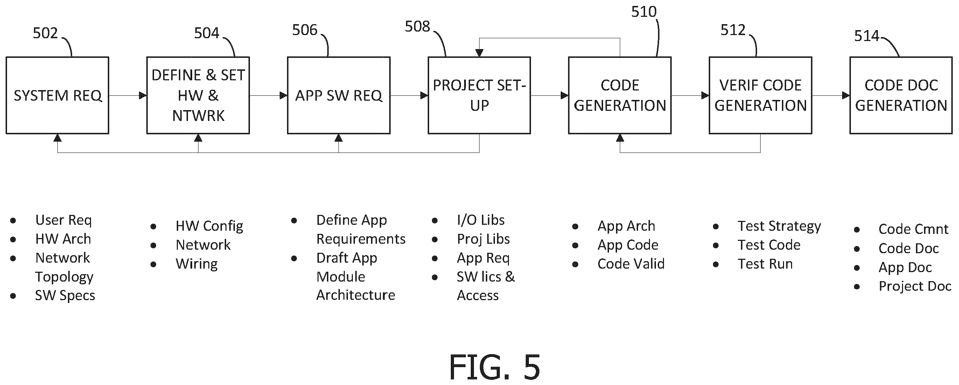

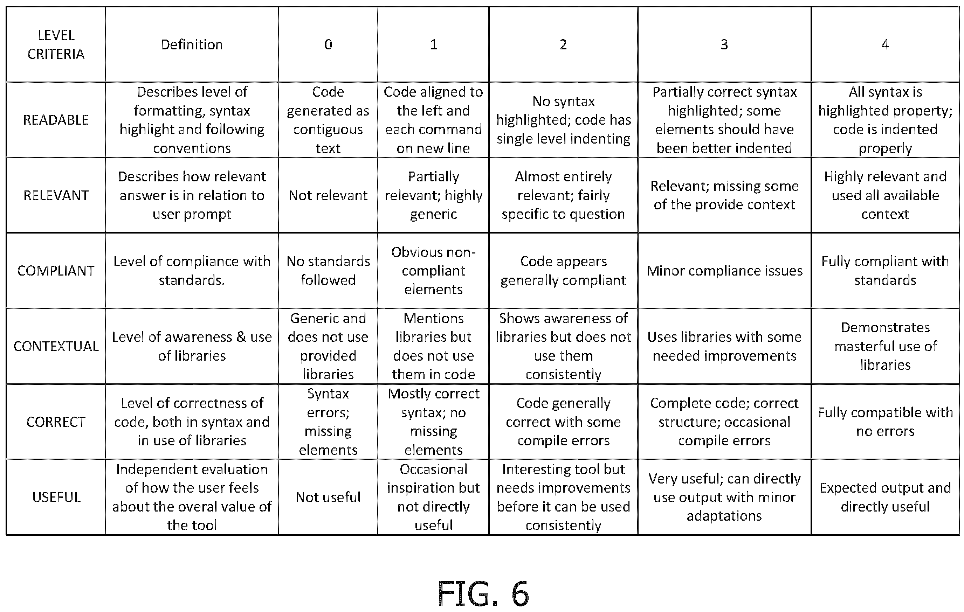

FIG. 5 shows an example method for use in generating application code in accordance with aspects of the present disclosure. In some examples, one or more system requirements may be obtained at 502. The system requirements may be received by RAG system 220 as user input, for example. Example system requirements may include user requirements, hardware requirements and/or network requirements at 504, and/or software requirements at 506. In some examples, the system requirements may be used to determine and/or identify one or more control objectives, as well as the functionality of each automation device 102, including input/output requirements and interactions with one or more other devices (e.g., field device, supervisory computer, etc.). The system requirements may then be used at 504, 506 to set and/or define one or more hardware parameters, network parameters, software parameters, etc. for use in drafting an application module architecture to set up a project at 508. In some examples, the RAG system 220 may use or coordinate with one or more libraries (e.g., I/O libraries, project libraries, etc.) to facilitate setting up the project for automated application code generation at 510 and evaluation at 512. The code may then be generated and/or evaluated in accordance with predefined frameworks, templates, standards, and/or best practices. For example, in some embodiments, the criteria shown in FIG. 6 (discussed further herein) is usable for evaluation of the resultant code, wherein a total code score may be generated based on an automated or manual evaluation of the code. The code may be used to delineate one or more sequence of operations, including main modes of operation and initialization routines. In some examples, the system 101 may generate documentation alongside the code at 514.

FIG. 6 shows example criteria that may be used for evaluating code generated using the system shown in FIG. 1 according to an embodiment.

Referring again to FIG. 2A, the flow diagram 201 and example process also incorporate an example code system 251 for generating code or text of predefined format (e.g., JavaScript Object Notation (JSON), extensible markup language (XML), etc.), which is usable, in certain embodiments, with the system 101 of FIG. 1, the process of FIG. 2A, and/or the LLM architecture of FIG. 2B. The generated code or text may be consumed by one or more functions in the system 101 to generate a final output. As shown in FIG. 2A, the code system 251 may include the contextual prompt generator system 252 (e.g., a requirements checker and/or RAG orchestrator) which generates accurate, relevant, and contextually-appropriate prompts by analyzing one or more specifications and/or user input. In some examples, the user may have an option to override or add one or more prompts. The code system 251 may also include a code or formatted text generator system (e.g., a code generator-evaluator) (not shown), which generates code based on the prompts generated by contextual prompt generator system 252. In this manner, the code system 251 may be configured to evaluate one or more process descriptions, extract one or more control narratives, generate one or more control sequences, and/or request the user to verify and receive inputs to update code, text as requested. For example, when the contextual prompt generator system 252 identifies no matches for a valve function or HMI in one or more libraries, the contextual prompt generator system 252 may generate one or more prompts for the application code generator system 254 to generate a new valve function or HMI symbol for a valve as a code. In some examples, application code generator system 254 may be configured to generate code in accordance with event-based architecture, as referred in IEC 61499 framework.

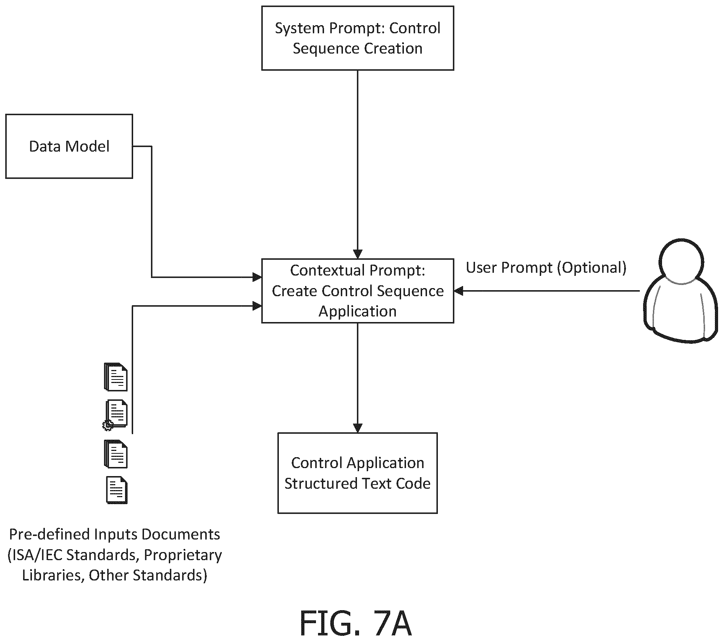

FIG. 7A shows an example control sequence generation using the systems and processes described herein. In response to a system prompt providing a higher-level machine requirement (e.g., "Control sequence generation"), contextual prompt generator system 252 may employ an elastic searching system to query and retrieve relevant inputs (e.g., control sequence-relevant documents, user input) and generate an accurate, relevant, and contextually-appropriate prompt for generating a suitable control application code in structured text.

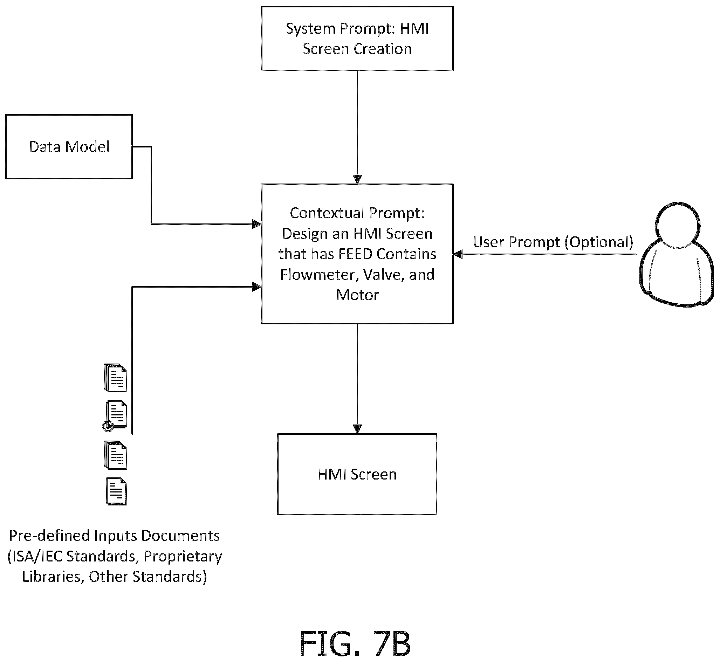

FIG. 7B shows an example HMI creation using the systems and processes described herein. In response to a system prompt which provides a higher-level machine requirement (e.g., "HMI screen creation"), contextual prompt generator system 252 may employ an elastic searching system to query and retrieve relevant inputs (e.g., HMI-relevant documents, user input) and generate an accurate, relevant, and contextually-appropriate prompt for generating a suitable HMI screen.

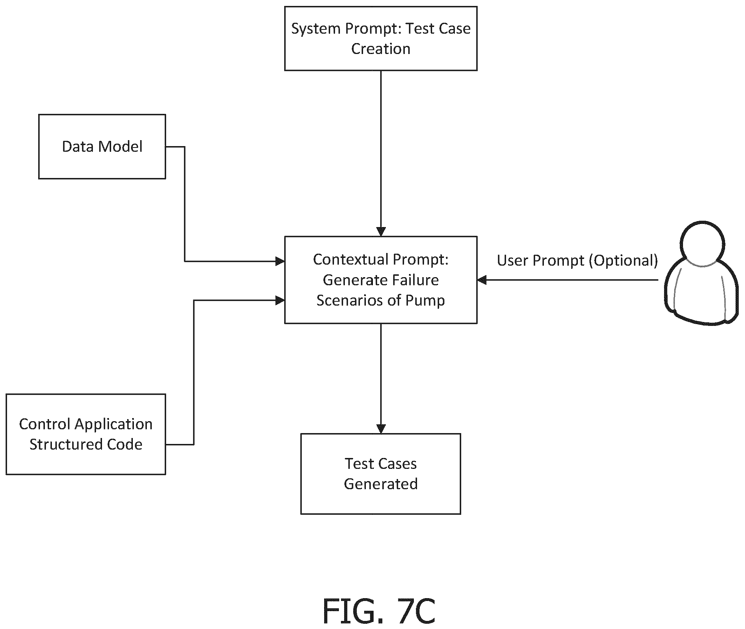

FIG. 7C shows an example test case generation using the systems and processes described herein. In response to a system prompt which provides a higher-level machine requirement (e.g., "Test case generation"), contextual prompt generator system 252 may analyze one or more specifications in data model and/or user interactions to generate an accurate, relevant, and contextually-appropriate prompt for generating one or more test cases. In some examples, the system may be configured to assist in a broad range of testing. For example, the system may be configured to assist in testing for adherence to design specifications and user expectations by generating anomaly and non-anomaly test cases. For another example, the system may be configured to assist in fault injection testing by generating test cases that simulate various failure scenarios, etc. The system may also be used to assist in generating unit and complex scenarios, performance testing etc. The system may be configured to integrate with automation frameworks to perform guided execution of generated test cases, further streamlining the testing process and reducing manual effort.

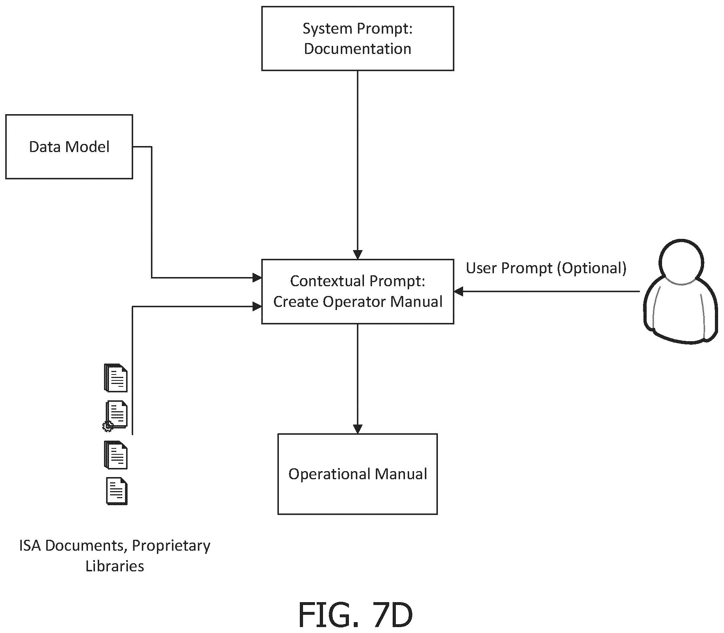

FIG. 7D shows an example documentation generation using the systems and processes described herein. In response to a system prompt which provides a higher-level machine requirement (e.g., "Documentation"), contextual prompt generator system 252 may analyze one or more specifications in data model and/or user interactions to generate an accurate, relevant, and contextually-appropriate prompt for generating suitable documentation. In some examples, the user interactions may include user input describing a type of document (e.g., maintenance manual, operation manual, code documentation, update functional specifications, etc.) and/or including a reference template. The system may be configured to generate technical documentation with advanced context understanding capabilities. For example, the contextual prompt generator system 252 may analyze source code and automatically generate technical documentation, including comments explaining functions, interlocks, alarms, etc. The system may also be configured to reorganize, review existing documents and suggest improvements not limited to documents but also to cater to technical changes in applications architecture. In some examples, the system may employ an enhanced search capabilities system to index and search through vast amounts of documentation quickly and accurately, helping application engineers locate relevant information more efficiently.

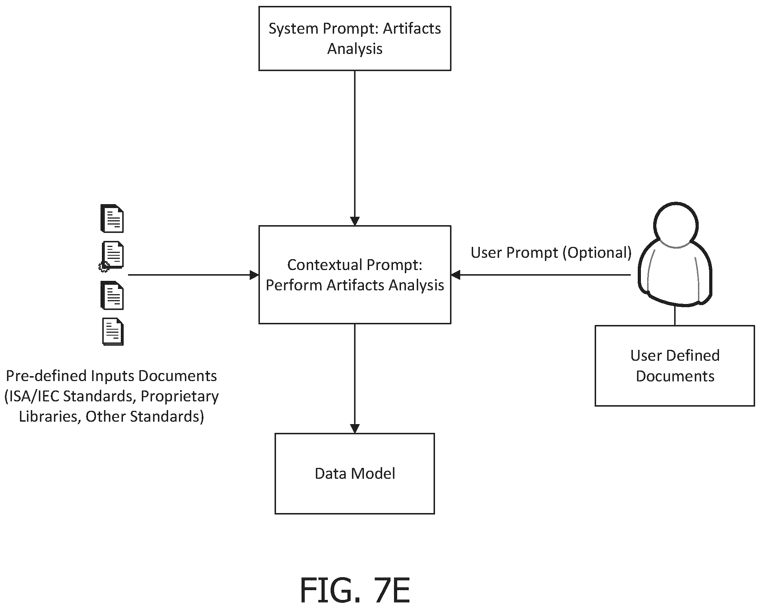

FIG. 7E shows an example system for automated data modeling and updating using the systems and processes described herein. In response to a system prompt which provides a higher-level machine requirement (e.g., "Perform artifacts analysis"), contextual prompt generator system 252 may employ an elastic searching system to query and retrieve relevant inputs (e.g., control sequence-relevant documents, user input) and generate an accurate, relevant, and contextually-appropriate prompt for extracting data and using the data for automated data modeling and updating. The systems described herein may be configured to construct or update one or more data models using data from a broad range of data sources, including one or more predefined inputs and/or user inputs.

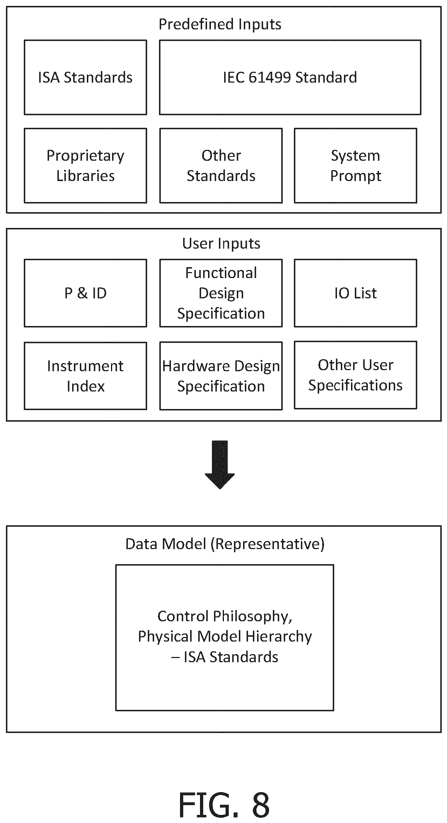

FIG. 8 illustrates a representative data model for data extraction as referred to with respect to FIG. 4. As shown in FIG. 8, example predefined inputs may include International Society of Automation (ISA) standards, IEC 61499 architecture elements, proprietary libraries, other standards or specifications, and/or system prompts, and example user inputs may include piping (or process) and instrumentation diagrams (P&IDs), process descriptions, input/output (IO) lists, instrument indexes, and other user specifications for the automated process (e.g. hardware specifications, control philosophies, etc.). The predefined inputs and/or user inputs may be in various forms, such as a portable document format (PDF) document, an extensible markup language (XML) file, a Word document (e.g. *.doc), an Excel worksheet (e.g., *.xls), an image file (e.g.,*.gif, *.jpeg, *.png), and/or other software tool-related files.

Application creation involves, for example, a plurality of interrelated operations which may vary from tool to tool. In some examples, operations may include data modeling and updating, asset creation, control sequence generation / control logic generation, HMI creation, test case generation, and/or document generation.

Referring again to FIG. 2A, the example process illustrates building a data model (e.g., apple juice making data model) according to another embodiment. To configure the system 101 for building a batch process control application, a data model may be constructed using predefined inputs. In some examples, predefined inputs may include proprietary libraries including functions and help documents related to assets such as valves, pumps, sensors, process control units, etc. Example help documents may include industry technical standard documents (e.g., PackML, ISA-5.1, ISA-88, ISA-95, ISA-106, IEC 61499), design guidelines, sequence diagrams, communication protocols, etc. For example, ISA-88 may be used to define assets (hardware and virtual) and procedures (e.g., recipes to run these assets to make apple juice) in a hierarchy and attributes some properties and standards to it.

At step 202, a data extraction prompt is triggered, and at steps 206 and 208, the contextual prompt generator system 252 communicates with a database (e.g., engineering database 106 of system 101) to extract relevant data (e.g. ISA-88 standards).

At step 204, a user may provide information for building a particular control application. For example, user input may include system diagrams (e.g., P&ID), flow sheets, process descriptions, etc. for use in building or updating an apple juice making data model. Additionally, the user may provide a high-level prompt: "Develop a batch control application for apple juice mixing with ISA88 standards & IEC 61499 Architecture".

At step 210, the contextual prompt generator system 252 determines whether certain conditions are met (e.g., whether there is sufficient context to understand the input and/or determine one or more machine requirements). If all of the certain conditions are met (e.g., sufficient context for generating an acceptable prompt), the process may jump ahead to step 214. However, if one or more conditions are not met, contextual prompt generator system 252 may prompt the user for additional user input at step 212 (e.g. "Please provide ISA88 Physical model for apple juice mixing"). Then, repeating step 204, the user may provide additional user input (e.g., the ISA88 Physical model for apple juice mixing) which triggers another data extraction prompt at steps 206 and 208, and the contextual prompt generator system 252 may repeat step 210 to determine whether the certain conditions are met.

When it is determined that all of the certain conditions are met (e.g., the "good context" decision block is satisfied), the contextual prompt generator system 252 may communicate with application code generator system 254 to generate a data model and output the model at step 216, which may be integrated with the system 101. At step 218, the contextual prompt generator system 252 may communicate with the database to save the data model at the database.

The example process of FIG. 2A may also be used for creating an asset (e.g., custom valve FV01) according to another embodiment. In some examples, asset creation involves creating a virtual functional copy of an asset provided in the P&ID. The asset may be autonomously created by leveraging the data model, predefined inputs, and/or system prompts. Example predefined inputs for creating an asset may include material relevant with the engineering tool and sample representation of input-output data for few shot learning (e.g., representation of custom valve generated in structured text with IEC 61499 specification).

At step 204, a create asset function prompt is triggered, and at steps 206 and 208, contextual prompt generator system 252 communicates with a database to extract relevant data (e.g. asset tags). In some examples, the create asset function may run autonomously until a predetermined set or number of assets are created.

At step 210, the contextual prompt generator system 252 may identify an asset tag list and communicate with application code generator system 254 to output application code associated with a valve function FV01 at step 216 which may be integrated with the system 101. In some examples, the output application code may be PLC code. Additionally or alternatively, the output application code may be any other file type that is compatible with the system 101, including a *.fbt file, an *.xml file, an *.html file, a *.pdf file, an *.xlsx file, a *.json file, etc. At step 218, the contextual prompt generator system 252 may communicate with the database to save the application code at the database.

In an embodiment, the example process of FIG. 2A may also be used to illustrate a process for generating a control sequence. In some examples, control sequence generation involves studying a process description and creating a sequential control function based on the process description. The control sequence may be autonomously created by leveraging the data model, predefined inputs, and/or system prompts. Example predefined inputs for creating a control sequence may include material relevant with the engineering tool and sample representation of input-output data for few shot learning (e.g. representation of batch process control-sequential control code generated in structured text with IEC 61499 specification).

At step 204, a create control sequence prompt is triggered, and at steps 206 and 208, the contextual prompt generator system 252 communicates with a database to extract relevant data (e.g. data model, process description). In some examples, the create control sequence function may run autonomously until a predetermined set or number of steps in the sequence are created.

At step 210, the contextual prompt generator system 252 may verify the procedure with tags and phrases and communicate with application code generator system 254 to output application code associated with structured text code at step 216 which may be integrated with the system 101. At step 218, the contextual prompt generator system 252 may communicate with the database to save the application code at the database.

According to another embodiment, the example process of FIG. 2A may also be used to illustrate a process for generating one or more test cases. In some examples, test case generation involves identifying a plurality of possible scenarios to test to validate the batch process control being developed. The test cases may be autonomously created by leveraging the data model, predefined inputs, and/or system prompts. Example predefined inputs for creating a test case may include material relevant with the engineering tool and sample representation of input-output data for few shot learning (e.g. representation of custom valve and generated code generated in structured text with IEC 61499 specification).

At step 204, a create test cases prompt is triggered, and at steps 206 and 208, the contextual prompt generator system 252 communicates with a database to extract relevant data (e.g., data model, process description, batch process control code). In some examples, the create test cases function may run autonomously until a predetermined set or number of test cases are created.

At step 210, the contextual prompt generator system 252 may determine relevant test cases and communicate with application code generator system 254 to output structured text code associated with the relevant test cases at step 216 which may be integrated with the system 101. At step 218, the contextual prompt generator system 252 may communicate with the database to save the structured text code at the database.

In yet another embodiment, the example process of FIG. 2A may also be used to illustrate a process for generating a document (e.g., code documentation, operator manual, maintenance manual, control narrative, etc.). In some examples, the documents may support the operators and process engineers to operate and debug any issues that may occur. By default, the system generates the documents in a predefined structure. The document may be autonomously created by leveraging the data model, predefined inputs, and/or system prompts. Alternatively, the user may force development of the document by loading a reference which triggers a create document prompt at step 204. Example predefined inputs for creating a document may include material relevant with the engineering tool and sample representation of input-output data for few shot learning (e.g., representation of code document, operator manual, maintenance manual, control narrative, etc.).

At step 204, a create document prompt is triggered, and at steps 206 and 208, the contextual prompt generator system 252 communicates with a database to extract relevant data (e.g., data model, process description, batch process control code). In some examples, the create asset function may run autonomously until a predetermined set or number of documents are created.

At step 210, the contextual prompt generator system 252 may identify a document generated and communicate with application code generator system 254 to output application code associated with the document at step 216 which may be integrated with the system 101. In some examples, the output application code may a *.pdf file. At 218, the contextual prompt generator system 252 may communicate with the database to save the application code at the database.

With this apple juice making example, presented herein are various workflows, including different types of user input augmentation to contextualize data and generate output, and how the same repository of data can be leveraged to generate a broad range of application code.

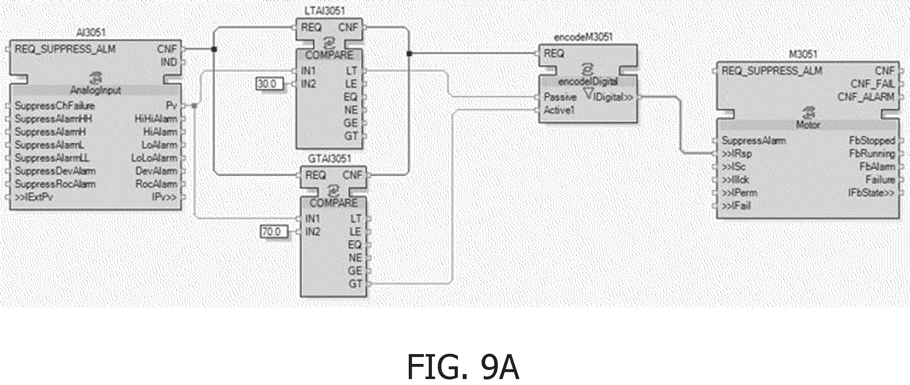

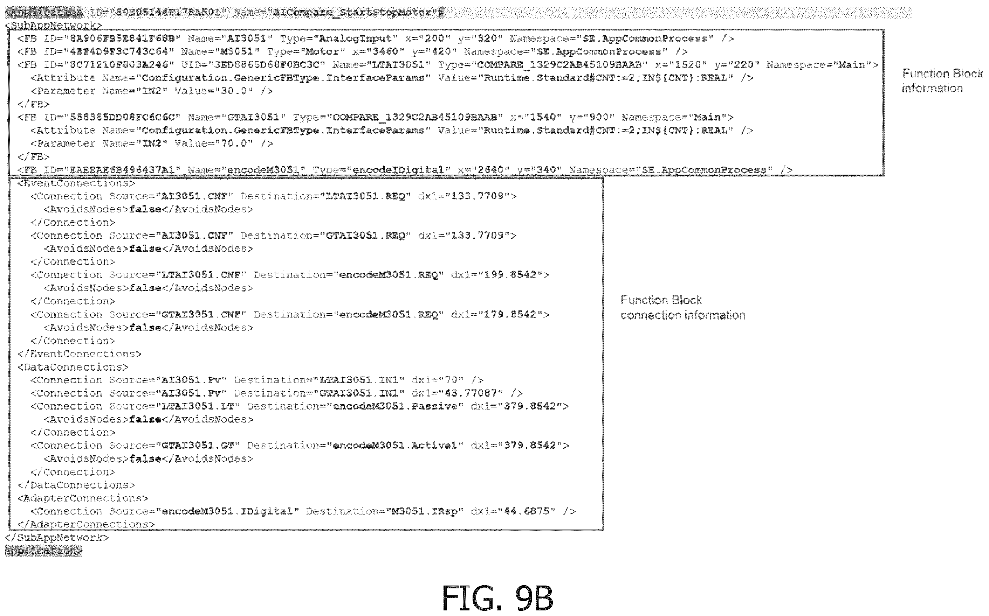

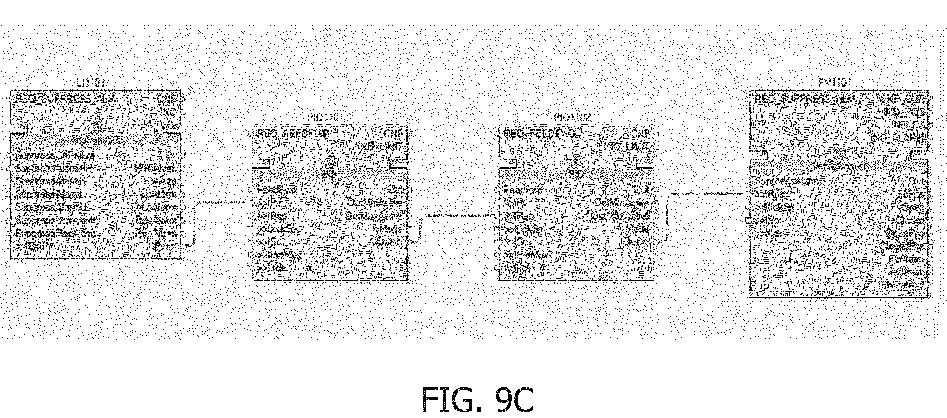

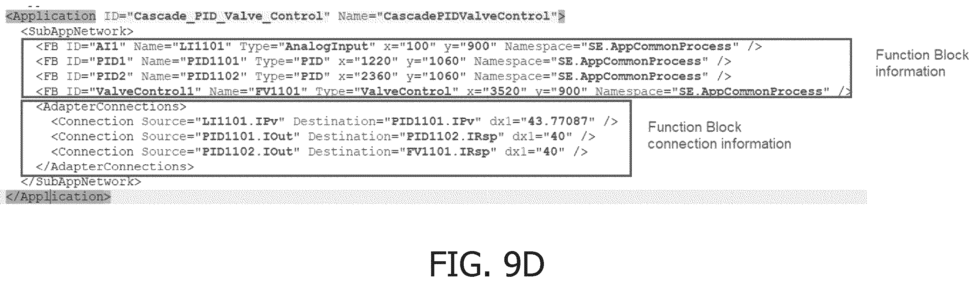

FIG 9A is an example application generated by the system 101 of FIG. 1 according to one or more embodiments, such as those illustrated in FIGS. 7A-7E, and FIG. 9B represents an XML output from LLM engine 108 corresponding to the application of FIG. 9A. FIG 9C is another example application generated by the system 101 of FIG. 1 according to one or more embodiments, such as those illustrated in FIGS. 7A-7E, and FIG. 9D represents an XML output from LLM engine 108 corresponding to the application of FIG. 9C. It is to be understood FIGS. 9A to 9D demonstrate non-limiting example inputs, wherein system 101 is configured to collect information from predefined inputs and add it to user input, such as described below.

Input for an example use case of FIGS. 9A and 9B: In industrial processes, precise motor control based on tank level is critical for maintaining consistent product quality. The developed control system manages motor operations with exceptional reliability. An analog input block AI3051 conditions input signals, meticulously suppressing potential noise from level measurement systems. Tank level is maintained against predefined setpoints, with the system programmed to stop the motor when detecting a low level (30%) and restart it upon reaching a high level (70%), creating intelligent logic triggers for motor control. The motor block M3051 serves as the final execution point, precisely controlling the motor's start and stop operations. This integrated system ensures that the motor runs only under specific level conditions, effectively preventing issues such as dry running or overfilling, thereby protecting critical equipment and maintaining process consistency. In operation, system 101 generates the application code exemplified by the functions blocks connected together to form the application of FIG. 9B in response to these inputs, e.g., in certain embodiments, in accordance with the process of FIG. 2A and the LLM architecture of FIG. 2B.

Input for an example use case of FIGS. 9C and 9D: In complex industrial processes like chemical or water treatment, precise multi-loop tank level control becomes essential. The cascade PID control system illustrated with blocks LI1101, PID1101, PID1102, and FV1101 represents an advanced strategy for managing tank liquid levels with exceptional precision. The analog input block LI1101 conditions input signals, suppressing potential noise and false alarms from level measurement systems. The first PID controller (PID1101) operates as the primary (outer) loop, monitoring overall tank level and generating a flow rate setpoint based on the deviation from the desired level. The secondary PID controller (PID1102) receives this setpoint and focuses on the inner loop, precisely controlling the feed control valve position to achieve the required flow rate. The valve control block FV1101 translates these calculated control signals into actual valve movements, ensuring minute adjustments that maintain consistent tank levels. This cascade control approach allows rapid response to process disturbances, with the inner loop compensating for valve nonlinearities and the outer loop maintaining overall system stability, creating a robust and intelligent tank level management solution. In operation, system 101 generates the application code exemplified by the functions blocks connected together to form the application of FIG. 9D in response to these inputs, e.g., in certain embodiments, in accordance with the process of FIG. 2A and the LLM architecture of FIG. 2B.

### Example Computing System

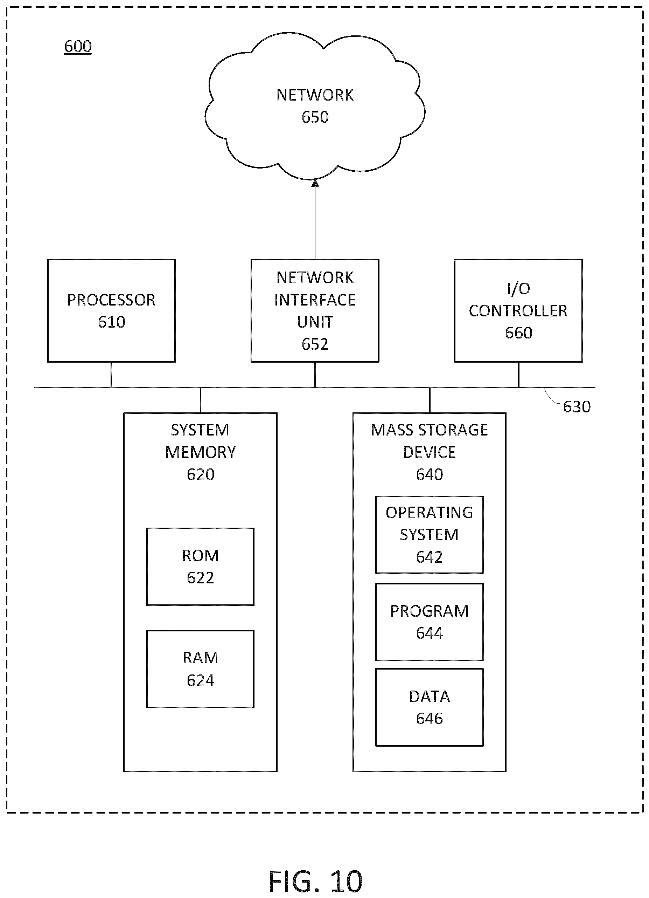

FIG. 10 shows an example computing system 600 (e.g., automation devices 102, engineering processor 104, engineering database 106, LLM engine 108, machine learning system 219) configured to perform one or more computing operations described herein. In some examples, the computing system 600 includes a processor 610, a system memory 620, and a bus 630 coupling various system components including the system memory 620 to the processor 610.

The processor 610 is configured to perform general computing functions and process data and instructions to perform one or more operations and/or provide other functionality described herein. For example, the processor 610 may access the system memory 620 to read data and instructions from and/or write data and instructions to the system memory 620 for use in executing one or more computer-executable instructions. In this manner, the processor 610 may be programmed to execute any aspect of the software components described herein, including software components of machine learning system 219 for implementing the RAG system 220 (shown in FIG. 2B). According to one or more aspects of the present disclosure, processor 610 embodies a code generation processor.

In some examples, the processor 610 may be or include any quantity of processing units including a central processing unit, a graphics processing unit, a field-programmable gate array (FPGA), a digital signal processor (DSP), or other hardware logic components including, without limitation, an Application-Specific Integrated Circuit (ASIC), Application-Specific Standard Product (ASSP), System-on-a-Chip System (SOC), Complex Programmable Logic Device (CPLD), etc.

The system memory 620 includes any combination of computer-readable media that may be accessed by the processor 610. In some examples, the system memory 620 includes a read-only memory (ROM) 632 which stores instructions for executing basic functions and a random access memory (RAM) 634 which temporarily stores data and instructions for actively used programs.

Computer-readable media includes both communication media and computer storage media. Communication media typically embody computer-readable instructions, data structures, program modules, or other data in a modulated data signal, such as a carrier wave or other transport mechanism. The term "modulated data signal" means a signal that has one or more of its characteristics set or changed in a manner as to encode information in the signal. By way of example, and not limitation, communication media includes wired media, such as a wired network or direct-wired connection, and wireless media, such as acoustic, radio frequency, and infrared media.

In contrast, computer storage media include tangible forms of media that can store information such as computer-readable instructions, data structures, program modules, or other data. By way of example, and not limitation, computer storage media includes ROM 632, RAM 634, hard disk drives (HDDs), solid-state drives (SSDs), external hard drives, flash drives, optical storage media (e.g., compact discs (CDs), digital versatile discs (DVDs), and magnetic storage media (e.g., tape drives). For purposes of the present disclosure, computer storage media is mutually exclusive to communication media and excludes waves, signals, and other transitory or intangible forms of media.

It should be appreciated that the software components described herein, when loaded into the processor 610 and executed, may transform the processor 610 and the overall computing system 600 from a general-purpose computing system into a special-purpose computing system customized to facilitate the functionality described herein. More specifically, the computer-executable instructions contained within the software components described herein transform the processor 610 to operate or function as a finite-state machine by specifying how the processor 610 transitions between states, thereby transforming the transistors or other discrete circuit elements constituting the processor 610.

Encoding the software components described herein may also transform the physical structure of the computer-readable media described herein. The specific transformation of physical structure may depend on various factors, in different implementations of the present disclosure. Examples of such factors may include, but are not limited to, the technology used to implement the computer-readable media, whether the computer-readable media is characterized as primary or secondary storage, and the like. For example, if the computer-readable media is implemented as semiconductor-based memory, the software disclosed herein may be encoded on the computer-readable media by transforming the physical state of the transistors, capacitors, or other discrete circuit elements constituting the semiconductor-based memory. The software also may transform the physical state of such components in order to store data thereupon.

As another example, the computer-readable media disclosed herein may be implemented using magnetic or optical technology. In such implementations, the software presented herein may transform the physical state of magnetic or optical media, when the software is encoded therein. These transformations may include altering the magnetic characteristics of particular locations within given magnetic media. These transformations also may include altering the physical features or characteristics of particular locations within given optical media, to change the optical characteristics of those locations. Other transformations of physical media are possible without departing from the scope and spirit of the present description, with the foregoing examples provided only to facilitate this discussion.

In some examples, the computing system 600 includes a mass storage device 640 coupled to the processor 610 for hosting or storing data and instructions, such as an operating system 642, one or more programs 644 (e.g., RAG system 220), and/or data 646. One of ordinary skill in the art would understand that copies of at least some data and/or instructions hosted or stored in the mass storage device 640 may be at least temporarily stored in the system memory 620 to enable the computing system 600 to function as described herein.

As shown in FIG. 10, the computing system 600 may connect to a network 650 (e.g., network 130) through a network interface unit 652 connected to the bus 630. In this manner, the computing system 600 may operate in a networked environment in which the computing system 600 may use one or more remote devices (not shown) to host or store at least some data and/or to execute at least some instructions. For example, the computing system 600 may include one or more client-side applications that perform one or more operations at the computing system 600 while one or more operations are performed remotely (e.g., in the "cloud"). Computer communication between computing systems can be a network transfer, a file transfer, an applet transfer, an email, a hypertext transfer protocol (HTTP) transfer, and so on.

In some examples, the computing system 600 may include one or more input/output (I/O) controllers 660 that facilitate communication and data transfer between the processor 610 and one or more I/O devices (not shown) configured to provide input and/or output capabilities. For example, a user may enter commands and information into the computing system 600 using one or more input devices, such as a keyboard, pointing device (e.g., mouse, trackball, touch pad, stylus), microphone, camera, scanner, accelerometer, and the like. Additionally or alternatively, the computing system 600 may present various forms of information, such as text, images, audio, video, alerts, and the like, using one or more output devices, such as a monitor, projector, printer, speaker, actuator, and the like. In some examples, the output device may be integrated with the input device (e.g., in a touchscreen panel or in a controller including a vibrating component).

While some examples are illustrated and described herein with reference to the computing system 600 being, including, or being included in the automation devices 102, engineering processor 104, engineering database 106, LLM engine 108, and/or RAG system 220, aspects of the present disclosure are operable with any computing system that can execute computer-executable instructions to implement the operations and functionality associated with the computing system 600. It is also contemplated that the computing system 600 may not include all of the components shown in FIG. 10, may include other components that are not explicitly shown in FIG. 10, or may utilize an architecture completely different than that shown in FIG. 10. The computing system 600 should not be interpreted as having any dependency or requirement relating to any one or combination of components shown in FIG. 10. The computing system 600 is only one example of a computing and networking environment for performing one or more computing operations and is not intended to suggest any limitation as to the scope of use or functionality of the present disclosure.

Example methods and systems are described herein for generating automated control applications. The examples described herein take user input and generate one or more instructions or prompts for building and an entire application based at least in part on the user input. Additionally, the examples described herein enable control applications to be built in an efficient and user-friendly manner. While working on batch or continuous processes, engineers use a set of documents like P&ID, IO lists, user requirement specifications, instrument indexes, standard definitions of ISA88, ISA106 for batch and continuous processes and others to build these control applications. However, at least some control applications are not being adapted to advanced architectures like IEC 61499 which discuss event driven paradigm that facilitate better IT/OT Convergence and safeguards future of automation mainly due to stringent deadlines, rigor involved in going through hundreds of pages to understand requirements, steep learning curve involved in understanding IEC 61499 practices, and lack of experts and expertise for faster control application development.

IT (Information Technology) is the technology backbone of any organization, managing electronic data. OT (Operational Technology), on the other hand, controls physical processes and equipment in industrial operations. IT/OT
convergence integrates data management systems with industrial operation systems, allowing for real-time data exchange and improved decision-making.

The examples described herein allow control applications to be adapted to advanced architectures like IEC 61499. Automated text/code generation can lead to cost savings by reducing development time, reducing errors, and/or improving system reliability. Moreover, it can facilitate lowering the learning curve for engineers. In view of the above, it will be seen that several advantages of the aspects of the present disclosure are achieved and other advantageous results attained.

The examples illustrated and described herein as well as examples not specifically described herein but within the scope of aspects of the present disclosure constitute example means for managing cryptographic identities. For example, the elements illustrated in the figures, when programmed, encoded, or configured to perform the illustrated operations, constitute at least an example means for receiving input data defining a set of specifications, analyzing input data to retrieve relevant information from a large corpus, generating one or more prompts based on relevant information, and using one or more prompts to generate application code in accordance with an advanced architecture such as IEC 61499.

Embodiments of the present disclosure may comprise a special purpose computer including a variety of computer hardware, as described in greater detail herein.

For purposes of illustration, programs and other executable program components may be shown as discrete blocks. It is recognized, however, that such programs and components reside at various times in different storage components of a computing device, and are executed by a data processor(s) of the device.

Although described in connection with an example computing system environment, embodiments of the aspects of the disclosure are operational with other special purpose computing system environments or configurations. The computing system environment is not intended to suggest any limitation as to the scope of use or functionality of any aspect of the disclosure. Moreover, the computing system environment should not be interpreted as having any dependency or requirement relating to any one or combination of components illustrated in the example operating environment. Examples of computing systems, environments, and/or configurations that may be suitable for use with aspects of the disclosure include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Embodiments of the aspects of the present disclosure may be described in the general context of data and/or processor-executable instructions, such as program modules, stored in memory, i.e., one or more tangible, non-transitory storage media, and executed by one or more processors or other devices. Generally, program modules include, but are not limited to, routines, programs, objects, components, and data structures that perform particular tasks or implement particular abstract data types. Aspects of the present disclosure may also be practiced in distributed computing environments where tasks are performed by remote processing devices that are linked through a communications network. In a distributed computing environment, program modules may be located in both local and remote storage media including memory storage devices.

In operation, processors, computers and/or servers may execute the processor-executable instructions (e.g., software, firmware, and/or hardware) such as those illustrated herein to implement aspects of the disclosure.

Embodiments may be implemented with processor-executable instructions. The processor-executable instructions may be organized into one or more processor-executable components or modules on a tangible processor readable storage medium. Also, embodiments may be implemented with any number and organization of such components or modules. For example, aspects of the present disclosure are not limited to the specific processor-executable instructions or the specific components or modules illustrated in the figures and described herein. Other embodiments may include different processor-executable instructions or components having more or less functionality than illustrated and described herein.

The order of execution or performance of the operations in accordance with aspects of the present disclosure illustrated and described herein is not essential, unless otherwise specified. That is, the operations may be performed in any order, unless otherwise specified, and embodiments may include additional or fewer operations than those disclosed herein. For example, it is contemplated that executing or performing a particular operation before, contemporaneously with, or after another operation is within the scope of the disclosure.

When introducing elements of the disclosure or embodiments thereof, the articles "a," "an," "the," and "said" are intended to mean that there are one or more of the elements. The terms "comprising," "including," and "having" are intended to be inclusive and mean that there may be additional elements other than the listed elements.

Not all of the depicted components illustrated or described may be required. In addition, some implementations and embodiments may include additional components. Variations in the arrangement and type of the components may be made without departing from the spirit or scope of the claims as set forth herein. Additional, different or fewer components may be provided and components may be combined. Alternatively, or in addition, a component may be implemented by several components.

The above description illustrates embodiments by way of example and not by way of limitation. This description enables one skilled in the art to make and use aspects of the disclosure, and describes several embodiments, adaptations, variations, alternatives and uses of the aspects of the disclosure, including what is presently believed to be the best mode of carrying out the aspects of the disclosure. Additionally, it is to be understood that the aspects of the disclosure are not limited in its application to the details of construction and the arrangement of components set forth in the following description or illustrated in the drawings. The aspects of the disclosure are capable of other embodiments and of being practiced or carried out in various ways. Also, it will be understood that the phraseology and terminology used herein is for the purpose of description and should not be regarded as limiting.

It will be apparent that modifications and variations are possible without departing from the scope of the disclosure defined in the appended claims. As various changes could be made in the above constructions and methods without departing from the scope of the disclosure, it is intended that all matter contained in the above description and shown in the accompanying drawings shall be interpreted as illustrative and not in a limiting sense.

In view of the above, it will be seen that several advantages of the aspects of the disclosure are achieved and other advantageous results attained.

Accordingly, the present invention may also be described as follows, optionally in combination with one or more of the above-mentioned features of the present invention: Relatively simple user input is used to develop an automated control application. For automated control application development with IEC 61499 architecture, a method includes receiving a system prompt, automatically retrieving relevant information from a large corpus, wherein the large corpus includes a plurality of libraries, automatically creating an asset based on the relevant information, automatically generating a control sequence based on the relevant information, automatically generating a human-machine interface based on the relevant information, automatically generating a test case based on the relevant information, and automatically generating documentation based on the relevant information.

## Claims

1. Computing system for automated generation of code for use in an industrial control system, the computing system comprising:
a database storing data relating to the industrial control system;
a code generation processor;
a memory storing processor-executable instructions that, when executed, configure the code generation processor for:
receiving a generalized system prompt;
in response to the system prompt, automatically retrieving relevant information from the database, the retrieved relevant information including a predefined code format;
automatically deriving a contextual prompt based on the retrieved relevant information; and
in response to the contextual prompt, generating code in accordance with a predefined code format.

2. Computing system as set forth in claim 1, wherein the memory stores processor-executable instructions that, when executed, further configure the code generation processor for receiving one or more user inputs, and wherein the processor-executable instructions for automatically deriving the contextual prompt include processor-executable instructions that, when executed, configure the code generation processor for automatically deriving the contextual prompt based on the retrieved relevant information and the received user inputs.

3. Computing system as set forth in claim 2, wherein the user inputs comprise at least one of the following types of inputs: P&ID, process description, IO list, instrument index, hardware specification, control philosophy, or a user specification, and wherein the user inputs comprise at least one of the following forms of inputs: Portable Document Format (PDF) documents, Extensible Markup Language (XML) files, text documents, spreadsheets, image extensions, or other software tool-related file extensions.

4. Computing system as set forth in any one of claims 1 to 3, wherein the data relating to the industrial control system stored in the database includes a plurality of predefined inputs, the predefined inputs comprising one or more of previously processed user inputs; International Society of Automation (ISA) standards; International Electrotechnical Commission (IEC) 61499 architecture elements, code libraries, or predefined system prompts.

5. Computing system as set forth in any one of claims 1 to 4, wherein the processor-executable instructions for generating the code include processor-executable instructions that, when executed, further configure the code generation processor for:
automatically creating an asset based on the retrieved relevant information; and/or
automatically generating a control sequence based on the retrieved relevant information.

6. Computing system as set forth in any one of claims 1 to 5, wherein the processor-executable instructions for automatically deriving the contextual prompt include processor-executable instructions that, when executed, further configure the code generation processor for querying the database for data relating to one or more of sequence manager, start, stop, abort, another sequence, or interlock as relevant to the control sequence.

7. Computing system as set forth in any one of claims 1 to 6, wherein the processor-executable instructions for generating the code include processor-executable instructions that, when executed, further configure the code generation processor for automatically generating at least one of:
one or more test cases based on the retrieved relevant information, the test cases configured to validate the control sequence;
a human-machine interface based on the retrieved relevant information;
documentation based on the retrieved relevant information; or
a control application based on the retrieved relevant information.

8. Computing system as set forth in any one of claims 1 to 7, wherein the processor-executable instructions for automatically deriving the contextual prompt include processor-executable instructions that, when executed, further configure the code generation processor for querying the database to analyze one or more of specifications in a data model and prior user interactions.

9. Computing system as set forth in any one of claims 1 to 8, wherein the database storing data relating to the industrial control system comprises a data model including one or more of asset data, hardware descriptions, IO lists, or physical model hierarchies relating to the industrial control system.

10. Method for automated generation of code for use in an industrial control system, the method comprising:
receiving a generalized system prompt;
in response to the system prompt, automatically retrieving relevant information from a database, wherein the database stores data relating to the industrial control system, and wherein the retrieved relevant information includes a predefined code format;
automatically deriving a contextual prompt based on the retrieved relevant information; and
in response to the contextual prompt, generating code in accordance with a predefined code format.

11. Method as set forth in claim 10, further comprising receiving one or more user inputs, and wherein automatically deriving the contextual prompt includes automatically deriving the contextual prompt based on the retrieved relevant information and the received user inputs.

12. Method as set forth in claim 10 or claim 11, further comprising storing the data relating to the industrial control system in the database, wherein the data includes a plurality of predefined inputs, and wherein the predefined inputs include one or more of previously processed user inputs; International Society of Automation (ISA) standards; International Electrotechnical Commission (IEC) 61499 architecture elements, code libraries, or predefined system prompts.

13. Method as set forth in any one of claims 10 to 12, wherein generating the code includes at least one of:
automatically creating an asset based on the retrieved relevant information; or
automatically generating a control sequence based on the retrieved relevant information.

14. Method as set forth in claim 13, automatically deriving the contextual prompt includes at least one of:
querying the database for at least one of data relating to one or more of sequence manager, start, stop, abort, another sequence, or interlock as relevant to the control sequence; or
querying the database to analyze one or more of specifications in a data model and prior user interactions

15. Method as set forth in any one of claims 10 to 14, wherein generating the code includes one or more of:
automatically generating one or more test cases based on the retrieved relevant information, wherein the test cases are configured to validate the control sequence;
automatically generating a human-machine interface based on the retrieved relevant information;
automatically generating documentation based on the retrieved relevant information; or
automatically generating a control application based on the retrieved relevant information.
